# EUROPÄISCHE PATENTSCHRIFT

(11) **EP 1 283 774 B1**
(45) Veröffentlichungstag und Bekanntmachung des Hinweises auf die Patenterteilung: **29.09.2004**
(21) Anmeldenummer: 01931306.3
(22) Anmeldetag: 23.05.2001
(51) Int. Cl.: B29C 65/54, D05B 1/26, A41D 27/24

(54) **VERBINDUNG VON TEXTILIEN**
TEXTILE ASSEMBLY
RACCORDEMENT DE TEXTILES

(30) Priorität: 24.05.2000 CH 104200
(43) Veröffentlichungstag der Anmeldung: 19.02.2003
(73) Patentinhaber: Schaepper Engineering GmbH, 9470 Buchs (CH)
(72) Erfinder: SCHAEPPER, Walter, CH-9470 Buchs (CH)
(74) Vertreter: EGLI-EUROPEAN PATENT ATTORNEYS
(86) Internationale Anmeldenummer: PCT/CH2001/000322
(87) Internationale Veröffentlichungsnummer: WO 2001/089812

(56) Entgegenhaltungen:
- WO-A-96/00810
- DE-A- 3 342 394
- FR-A- 2 737 954
- US-A- 3 295 493
- US-A- 3 785 898

## Beschreibung

Die Erfindung betrifft eine Vorrichtung sowie ein Verfahren zum Verbinden von Textilien gemäss dem Oberbegriff der unabhängigen Ansprüche 1 und 7.

Als Verfahren zum Verbinden von Textilien ist das Nähen seit Jahrtausenden bekannt. Durch Nähen können Textilien zuverlässig miteinander verbunden werden, ohne dass die Flexibilität der Textilien wesentlich beeinflusst wird. Typischerweise wird beim Nähen eine Nadel verwendet, mit welcher das zu verbindende Textilmaterial durchstossen wird. Durch das dabei entstehende Nadelloch wird üblicherweise ein Faden mitgeführt. Nähmaschinen erleichtern seit langer Zeit diese Arbeit. Zumeist entsteht so eine sichtbare Naht.

Aus WO 96/00810 sind Verfahren und Vorrichtungen zum Verbinden von Textilien bekannt, bei denen entweder eine solche Naht entsteht, oder bei denen - durch Weglassen eines Fadens und Einspritzen eines Verbindungsmaterials zwischen die zu verbindenden Textilien - eine Klebeverbindung erreicht werden kann. Für letztere wird eine Hohlnadel verwendet, mit der das Verbindungsmaterial - oder ein Vorläufermaterial dazu - im Bereich der Stichlöcher abgegeben wird. Nachteilig an solchen aus dem Stand der Technik bekannten Verfahren ist, dass in allen Fällen Stichlöcher entstehen und dass die Einstichtiefe der Nadel sehr exakt wiederholt und je nach der Dicke des Nähgutes bzw. der Art der Naht genau eingestellt werden muss.

Aus der US-A-3 295 493 (Shokichi Yamamoto) ist eine Vorrichtung und ein entsprechendes Verfahren bekannt, bei der ein Appliziermittel in einer der Ausführungsformen so aufgebracht wird, dass ein Durchstossen der Textilien vermieden wird. Dort ist es aber wesentlich, das Mittel beidseitig aufzutragen, was nachteilig ist und mit der vorliegenden Erfindung vermieden werden soll. Bei Yamamoto ist eine Anpressrolle 15 nötig und der Druck im Kleber dient zum Auftragen des Klebers, während ein Durchdringen durch die Anpressrolle vorgesehen ist.

Aus der DE-A-33 42 394 ist eine Vorrichtung zum Verschweissen von Kunststoffbahnen bekannt, bei der ein Quellschweissmittel die Eigenschaft eines Applikators hat, der von einem Appliziermittel ohne Durchstossen der Textilien aufgetragen wird. Die Kunststoffbahnen werden vorgewärmt.

Gemäss US-A-3 785 898 (Gerber) wird ein fluides Verbindungsmaterial durch ein Appliziermittel zwischen zwei Abschnitte gebracht ohne Durchstossen der Textilien.

Aufgabe der vorliegenden Erfindung ist es deshalb, eine alternative Vorrichtung sowie ein entsprechendes Verfahren zum Verbinden von Textilien vorzuschlagen, mit welchen diese Nachteile im Stand der Technik eliminiert werden können.

Diese Aufgabe wird gemäss den Merkmalen der unabhängigen Ansprüche 1 und 7 gelöst. Dabei haben die Massnahmen der Erfindung zunächst einmal zur Folge, dass das Appliziermittel durch ein Druckerzeugungsteil unterstützt wird und dadurch in der Lage ist, das Verbindungsmaterial nicht nur - wie beim genannten Stand der Technik - aufzutragen, sondern in die Textilien hinein oder sogar durch diese hindurchzupressen. Dies ist dann wichtig, wenn nur ein Appliziermittel vorgesehen ist und nicht, wie in der US-A-3 295 493 vorgeschlagen, zwei Appliziermittel von jeder Seite einfach auftragen. Weitere bevorzugte Ausführungsformen ergeben sich aus den abhängigen Ansprüchen.

Die vorliegende Erfindung wird nun an Hand von schematischen, lediglich beispielhafte Ausführungsformen zeigenden Zeichnungen näher erläutert. Dabei zeigen:
- Fig. 1: einen Querschnitt durch eine mit einer einfachen Düse im Durchdringungs-Verfahren hergestellten Verbindung von zwei Textilstücken, wobei:
Fig. 1A die im Prinzip einfachste Verbindung,
Fig. 1B,1C eine weitere, einfache Verbindung, und
Fig. 1D eine dreifache Verbindung, darstellt;
- Fig. 2: einen Querschnitt durch eine mit einer doppelten Düse im Durchdringungs-Verfahren hergestellten Verbindung von drei Textilstücken, wobei eine doppelte Verbindung dargestellt ist;
- Fig. 3: einen Querschnitt durch eine mit einer einfachen Düse im Durchdringungs-Verfahren hergestellten Verbindung von zwei Textilstücken, wobei eine einfache Ringverbindung dargestellt ist;
- Fig. 4: einen Querschnitt durch eine mit einer einfachen Düse im Durchdringungs-Verfahren hergestellten Verbindung von zwei Textilstücken, wobei:
Fig. 4A eine einfache Zick-Zack-Verbindung, und
Fig. 4B eine einfache Zick-Zack-Ringverbindung darstellt;
- Fig. 7: Ausführungsformen von nahtähnlichen Verbindungen:
Fig. 7A einfach, im Punkt- bzw. Strang-Verfahren;
Fig. 7B dreifach, im Punkt- bzw. Strang-Verfahren;
Fig. 7C einfach, im Durchdringungs-Punkt-Verfahren mit Hilfsfluidausstoss;
Fig. 7D einfach, im Strang-Zick-Zack-Verfahren;
Fig. 7E einfach, im Durchdringungs-Punkt-Verfahren mit Hilfsfluidausstoss, im Zick-Zack-Muster;
- Fig. 8: einen Vertikalschnitt durch eine erste Ausführungsform der Vorrichtung zur Verwendung nach dem Durchdringungs-Punkt-Verfahren;
- Fig. 10: einen Vertikalschnitt durch eine zweite Ausführungsform der Vorrichtung zur Verwendung nach dem Durchdringungs-Strang-Verfahren;
- Fig. 12: eine erste Ausführungsform eines Druckerzeugungsteils.

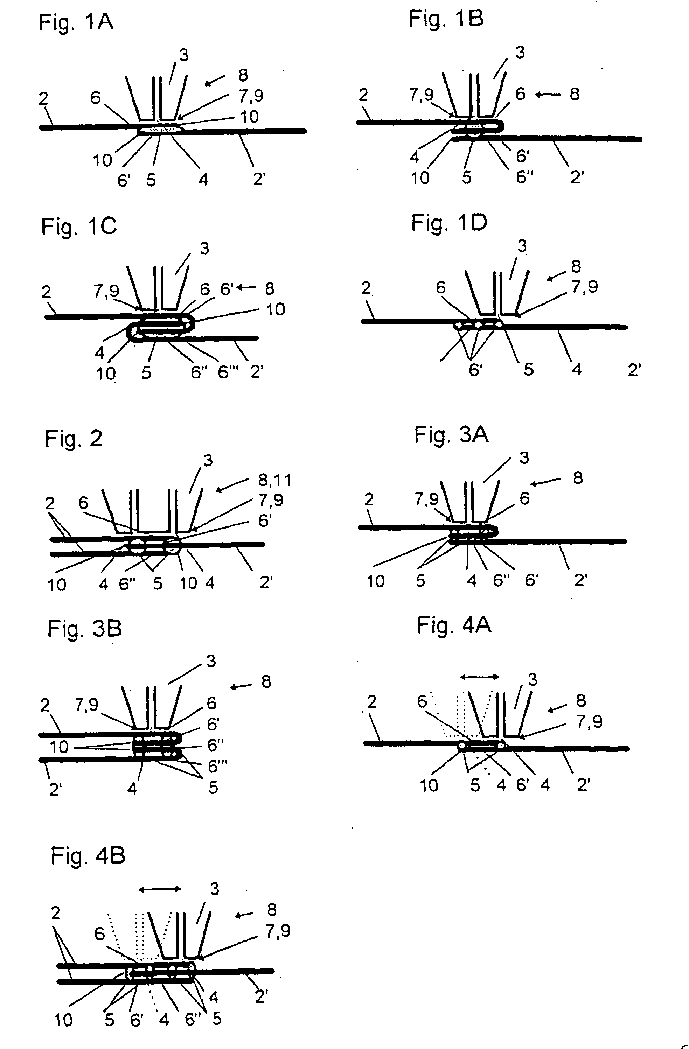

Figur 1 zeigt einen Querschnitt durch eine mit einer einfachen Düse im Durchdringungs-Verfahren hergestellten Verbindung von zwei Textilstücken. In der Folge werden Gewebe, Gewirke und Fliesstoffe als Textilien bezeichnet. Eine solche Verbindung wird mit einer Vorrichtung 1 zum Verbinden von Textilien 2,2' hergestellt. Die Vorrichtung 1 umfasst ein Appliziermittel 3, welches zumindest eine Öffnung 4 umfasst. Über die Öffnung 4 ist ein fluides Verbindungsmaterial 5 in die zwei oder mehrere, zumindest teilweise aufeinandergelegten und im Wesentlichen flächigen Textilienabschnitte 6,6',6'' bringbar. Das Appliziermittel 3 ist erfindungsgemäss zum Heranführen dieser Öffnung 4 in die Nähe einer Oberfläche der Textilien 2,2', jedoch nicht zum Durchstossen dieser Textilien ausgebildet. Das Appliziermittel 3 weist die Form einer einfachen Düse auf, deren Öffnung 4 nahe an die Aussenseite eines solchen Textilienabschnittes 6 gebracht wurde.

Figur 1A stellt die im Prinzip einfachste aller möglichen Verbindungen dar. Eine solche Verbindung von zwei Textilien 2,2', von denen je ein Textilienabschnitt 6,6' gerade und flach auf dem andern liegt, kann mittels dem Durchdringungs-Punkt- oder Durchdringungs-Strang-Verfahren hergestellt werden. Bevorzugt wird allerdings das Strang-Verfahren, weil es mit diesen gelingt, die Textilienränder 10 praktisch vollständig mit Verbindungsmaterial 5 zu bedecken bzw. zu fassen, so dass ein "Aufgehen", z.B. die Bildung von "Laufmaschen" bzw. ein "Ausfransen" der Textilien verhindert wird.

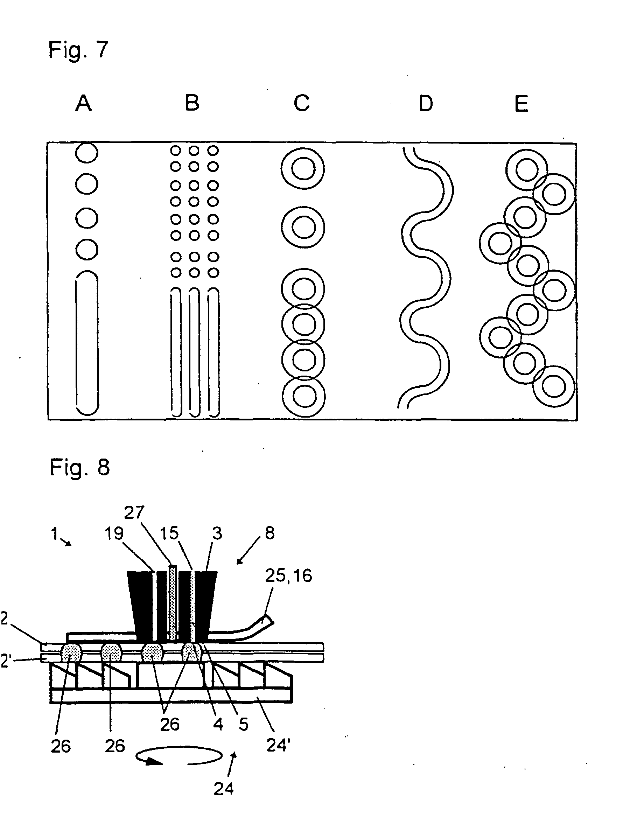

In Figur 1B und 1C ist ebenfalls eine einfache, nahtähnliche Verbindung dargestellt, bei deren Herstellung aber nur das fluide Verbindungsmaterial und nicht das Appliziermittel 3 einzelne Textilienabschnitte 6,6',6'' oder auch 6''' durchdringt. Die vorderste Spitze 7 des Appliziermittels 3 ist auch hier als kegelstumpfförmige Düse 8 ausgebildet, deren Öffnung 4 an der abgeflachten Oberfläche 9 des Kegelstumpfes 8 mündet. Diese schematische Darstellung zeigt das Verbindungsmaterial 5 mit einem runden Querschnitt. Selbstverständlich kann das Verbindungsmaterial 5 - je nach der applizierten Menge - auch einen abgeflachten Querschnitt aufweisen; dies wird meist der Normalfall sein (vgl. Fig. 1A). Aus diesen Darstellungen ist ebenfalls noch nicht ersichtlich, ob es sich um eine kontinuierliche Verbindung handelt oder nicht; beides ist möglich (vgl. auch Fig. 7A).

Figur 1D stellt eine dreifache Verbindung dar, bei der die zu verbindenden Textilienabschnitte 6,6' und das Appliziermittel 3 - nicht wie in Fig. 1A bis 1C einmal - sondern dreimal gegeneinander bewegt wurden. Dabei wurde darauf geachtet, dass die beiden Randverbindungen gerade den Textilienrand 10,10' komplett einfassen, womit erreicht wird, dass das Gewebe der Textilien nicht "aufgehen" kann. Bevorzugterweise werden die Randverbindungen für solche Zwecke als kontinuierliche Verbindung hergestellt (vgl. Fig. 7B, unten).

Die mittlere Verbindung - sie kann auch mehr als eine Verbindung umfassen - kann kontinuierlich oder punktförmig (vgl. Fig. 7B, oben) ausgebildet sein. Diese Art von Verbindung eignet sich sehr gut zum Verbinden von technischen Geweben, wie z.B. zur Herstellung von Säcken: Das Füllgut und die durch dieses entstehende Belastung kann ein Lösen der extrem auf Zug belasteten Verbindung bzw. ein sogenanntes "Schälen" der beiden Textilienabschnitte 6,6' nicht hervorrufen.

Figur 2 zeigt einen Querschnitt durch eine mit einer doppelten Düse 11 im Durchdringungs-Verfahren hergestellten Verbindung von drei Textilstücken 2,2',2'', wobei eine doppelte Verbindung dargestellt ist. Durch die Wahl einer solchen doppelten Düse 11, bzw. einer Dreifach- oder Mehrfachdüse (nicht dargestellt), kann eine Doppel- bzw. Mehrfachverbindung in einem Durchgang vervollständigt werden. Auch eine solche Verbindung kann extremen Zugbelastungen widerstehen und eignet sich z.B. für die Befestigung von Trägerstücken an Rucksäcken.

Figur 3 zeigt einen Querschnitt durch eine mit einer einfachen Düse 8 im Durchdringungs-Verfahren hergestellten Verbindung von zwei Textilienabschnitten 6,6', wobei eine einfache Ringverbindung dargestellt ist. Eine solche Verbindung wird dadurch erreicht, dass zuerst das Verbindungsmaterial 5 punktförmig in die zu verbindenden Textilienabschnitte hineingedrückt wird. Vor dem Aushärten des Verbindungsmaterials 5 bzw. vor dem Abkühlen des Schmelzklebers wird ein zweites Medium, ein sogenanntes Hilfsfluid 12 ins Zentrum des Verbindungsmaterial-Punktes gedrückt, so dass das Verbindungsmaterial 5 von dort verdrängt wird. Anschliessend lässt man das Verbindungsmaterial 5 erstarren, bzw. den Schmelzkleber abkühlen; zurück bleibt eine ringförmige Verbindung (vgl. Fig. 7C). Je nach der Viskosität des verwendeten Verbindungsmaterials können eher dünne (nur ein Textilstück 2 umgelegt, vgl. Fig. 3A) oder auch dickere Verbindungen (beide Textilstücke 2,2' umgelegt, vgl. Fig. 3B) ausgeführt werden.

Figur 4 zeigt einen Querschnitt durch eine mit einer einfachen Düse 8 im Durchdringungs-Verfahren hergestellten Verbindung von zwei Textilstücken 2,2'. Zum Ausführen einer einfachen, kontinuierlichen Zick-Zack-Verbindung (vgl. Fig. 4A und Fig. 7D) wird ein Appliziermittel 3, welches eine Öffnung 4 umfasst und als kegelstumpfförmige Düse 8 ausgebildet ist, in oszillierender Weise quer zur relativen Fortbewegungsrichtung der zu verbindenden Textilien 2,2' und der Düse 8 bewegt. In diesem Fall wurde die Querauslenkung gerade so gross gewählt, dass sich die Düse zwischen den beiden Randbereichen der Textilien 2,2' bewegt. Eine ähnliche, schrittweise Bewegungsart - in Verbindung mit dem Verdrängen des zentralen Teils eines Verbindungsmaterial-Punktes - ist in Fig. 4B abgebildet (vgl. auch Fig. 7E), wo eine einfache Zick-Zack-Ringverbindung darstellt ist.

Figur 7 zeigt unterschiedliche Ausführungsformen von nahtähnlichen Verbindungen, die sich aus der Verwendung einer Vorrichtung 1 im Durchdringungs-Verfahren (vgl. Fig. 7A bis 7E) ergeben. Der Ausstoss eines Hilfsfluids 12 wird für das Herstellen von Verbindungen, wie in Fig. 7C und 7E gezeigt, bevorzugt.

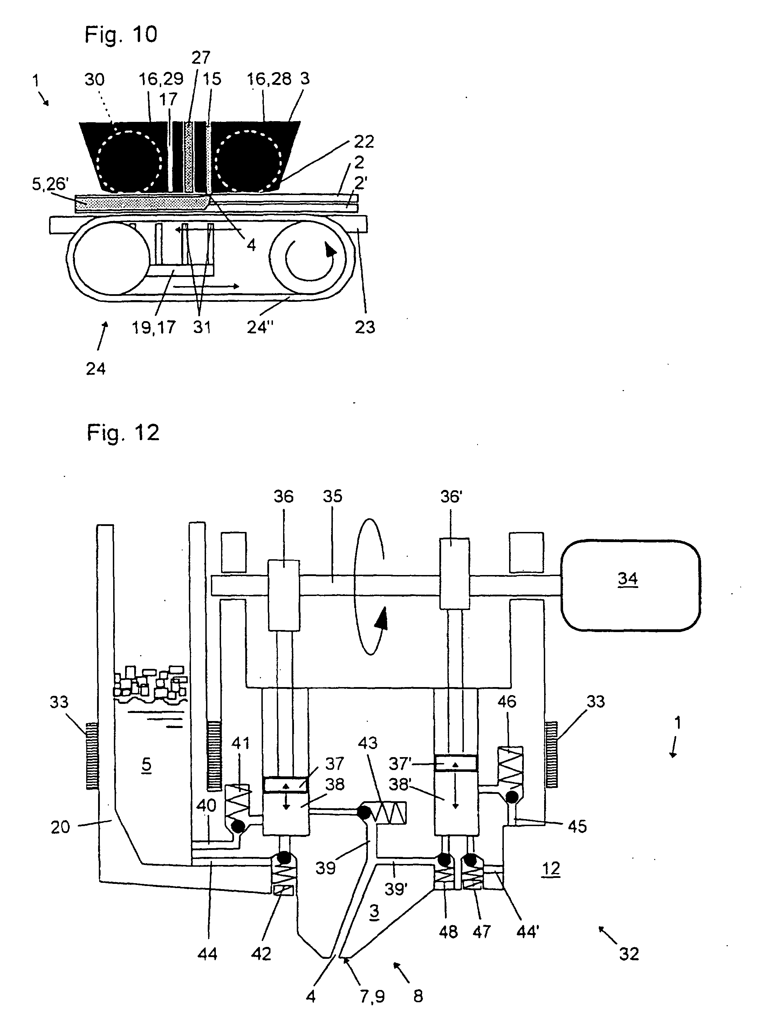

Zum Herstellen aller dieser und ähnlicher bzw. entsprechender, linienförmiger Verbindungen müssen das Appliziermittel 3 - sei dies eine kegelstumpf- oder eine fussförmige Düse 8 - und die zu verbindenden Textilienabschnitte 6,6'... relativ gegenüber einander beweglich sein. Zu diesem Zweck umfasst die Vorrichtung 1 bevorzugt eine Arbeitsfläche 23 zum Auflegen von zu verbindenden Textilienteilen 6,6' ... und ein Transportmittel 24 - zum Transportieren der Textilien gegenüber der Arbeitsfläche 23 und/oder dem Appliziermittel 3. Solche Transportmittel 24 können z.B. als Stoffschieber 24' (vgl. Fig. 8 und 9) oder als Transportband 24'' (vgl. Fig. 10 und 11) ausgebildet sein. Zum Ausführen von Zick-Zack-Verbindungen ist das Appliziermittel 3 vorzugsweise gegenüber der Arbeitsfläche 23 und/oder dem Transportmittel 24 beweglich ausgebildet.

Einfachere Ausführungsformen der erfindungsgemässen Vorrichtung 1 weisen ein Appliziermittel 3 auf, welches im Wesentlichen quer zur Transportrichtung der zu verbindenden Textilien beweglich ist. Es kann aber auch ein - vorzugsweise in einem bestimmten Abstand zu den zu verbindenden Textilien 2,2' - frei bewegliches Appliziermittel 3 vorgesehen sein, mit welchem beliebige Muster zur Verbindung der Textilien hergestellt werden können. Z.B. ein X/Y-Schlitten bzw. - Tisch, wie der eines an einen Computer angeschlossenen Plotters oder Druckers, eignen sich nach der entsprechenden Modifikation. Vorzugsweise wird dann auch zumindest ein Vorbereitungsmittel 22 und ein Verfestigungsmittel 17 mit dem Appliziermittel 3 zusammen bewegt.

Figur 8 zeigt einen Vertikalschnitt durch eine erste Ausführungsform der Vorrichtung 1 zur Verwendung nach dem Durchdringungs-Punkt-Verfahren. Der Stoff, d.h. die zu verbindenden Textilien 2,2' werden - wie beim im Stand der Technik bekannten Nähen - zwischen einen Nähfuss 25 und einen als Transportmittel 24 verwendeten Stoffschieber 24' einer Vorrichtung 1 eingeführt. Der als Drücker 16 wirkende Nähfuss 25 umfasst ein Appliziermittel 3 und ein Verfestigungsmittel. An Stelle einer Nadel wird ein Verbindungsmaterial 5, vorzugsweise ein flüssiger Schmelzkleber, über das als Düse ausgestaltete Appliziermittel 3 an die Textilien abgegeben: Eine dosierte Menge 26 des Schmelzklebers wird in die Textilien 2,2' eingespritzt. Beim Einspritzen bewegt sich das Appliziermittel 8 nicht, was das Nachliefern des flüssigen Schmelzklebers vereinfacht. Mit dem nächsten Hub des Stoffschiebers 24' gelangt der eingespritzte Schmelzkleberpunkt 26 an die Position des Verfestigungsmittels in Form eines Kühlluftkanals 19, wo diese dosierte Menge 26 des Verbindungsmaterials 5 schnell abkühlt und damit verfestigt. Abweichend von dieser Darstellung können auch mehrere Schmelzkleberpunkte 26 (z.B. mit einer Mehrfachdüse) nebeneinander und auch hintereinander (z.B. mit einer nicht gezeigten Array-Düse) aufgebaut werden. Diese Vorrichtung bzw. dieses Verfahren eignet sich besonders für poröse Textilien und solche, bei denen die sichtbaren Klebepunkte nicht stören. Damit Schmelzkleberzuleitung 15 und Kühlluftkanal 19 thermisch sauber getrennt sind, wird bevorzugt zwischen den entsprechenden, recht massiven Blöcken eine Wärmeisolation 27 angebracht. Der Stoffschieber 24' ist ohne Verfestigungsmittel gezeichnet, jedoch kann dieser - zum Verbessern der Kühlleistung - auch mit einem Kühlluftsystem (vgl. z.B. Fig. 9) ausgerüstet sein.

Figur 10 zeigt einen Vertikalschnitt durch eine zweite Ausführungsform der Vorrichtung zur Verwendung nach dem Durchdringungs-Strang-Verfahren. Der Stoff, d.h. die zu verbindenden Textilien 2,2' werden zwischen einem Gleitblock 28 und einen als Transportmittel 24 verwendeten Transportband 24'' einer Vorrichtung 1 eingeführt. Der als Drücker 16 wirkende Gleitblock 28 umfasst vorzugsweise ein Vorbereitungsmittel 22, ein Appliziermittel 3 und ein Verfestigungsmittel 17. Bei der Verwendung eines Schmelzklebers als Verbindungsmaterial 5 dient das Vorbereitungsmittel zur Vorwärmung der zu verbindenden Textilien 2,2' und das Verfestigungsmittel 17 zur Kühlung des Schmelzklebers 5. Das Appliziermittel 3, das zur Zuführung des Schmelzklebers heizbar ausgebildet ist, kann mit dem ebenfalls heizbaren Vorbereitungsmittel 22 gemeinsam ausgebildet sein, das gekühlte Verfestigungsmittel 17 ist von diesen beiden mittels einer Isolation 27 vorzugsweise thermisch getrennt. An Stelle einer Nadel wird ein Verbindungsmaterial 5, vorzugsweise ein flüssiger Schmelzkleber, über das als Düse ausgestaltete Appliziermittel 3 an die Textilien abgegeben: Schmelzklebermaterial wird kontinuierlich in die ebenfalls kontinuierlich transportierten Textilien 2,2' eingespritzt. Beim Einspritzen bewegt sich das Appliziermittel 3 nicht, was das Nachliefern des flüssigen Schmelzklebers und des Kühlmittels Luft (es können auch andere, vorzugsweise ölfreie Gase, wie z.B. Stickstoffgas oder Kohlendioxid verwendet werden) vereinfacht. Mit dem Transportband 24'' gelangt der eingespritzte Schmelzkleberstrang 26' an die Position des Verfestigungsmittels 17 in Form eines Kühlluftkanals 19 und/oder eines massiven Kühlblocks 29, wo dieser Strang schnell abkühlt und damit verfestigt. Auch hier können mehrere Schmelzkleberstränge 26' (z.B. mit einer Mehrfachdüse) nebeneinander aufgebaut werden. Der Transport der miteinander verbundenen Textilien 2,2' wird durch Rollen 30, die seitlich am Gleitblock 28 angeordnet sind, unterstützt. Diese Vorrichtung bzw. dieses Verfahren eignet sich besonders für technische Gewebe und Monofil-Filter und allgemein für das schnelle Herstellen von langen, geraden oder gekrümmten Verbindungen von Textilien 2,2'.

Abweichend von der Darstellung in den Figuren können auch Hilfsfluide 12 eingesetzt werden, die - zusammen mit dem Verbindungsmaterial 5 - ein chemisches Zweikomponentensystem bilden und die - beim Kontakt mit dem Verbindungsmaterial 5 - dieses zum Verfestigen bringen. Dieses Hilfsfluid 12 kann vor dem Verbindungsmaterial 5 als fluides Vorbereitungsmittel 22 eingesetzt werden, welches als chemische Vorläuferoder "Primer-" Substanz" die zu verbindenden Textilienabschnitte 6,6',6''... im Wesentlichen imprägniert und die ein Verfestigen des Verbindungsmaterials 5 bewirkt, sobald dieses in Kontakt mit dieser Primer-Substanz kommt. Ein nachträglich zum Aufbringen des Verbindungsmaterials 5 appliziertes Hilfsfluid 12 kann - mit oder ohne Strahlenunterstützung, wie UV-Licht und dergleichen - die gleiche Wirkung erzeugen.

Figur 12 zeigt eine erste Ausführungsform eines Druckerzeugungsteils 32, welches in der Vorrichtung 1 zur Erzeugung eines höheren Druckes im Verbindungsmaterial 5 dient. Dieses Druckerzeugungsteil 32 pumpt Schmelzkleber in eine herzustellende Verbindung, wie diese bisher beispielhaft beschrieben wurden. Es kann auch verwendet werden, um abwechslungsweise Schmelzkleber und Luft in die herzustellende Verbindung zu pumpen. Im zweiten Fall dient die Luft dazu, die punktuellen Verbindungsstellen zu trennen und den heissen Schmelzkleber von der Führungen möglichst fernzuhalten. Zusätzlich heizt die erwärmte Luft die zu verbindenden textilen Flächengebilde auf, was die Adhäsion des Klebers mit denselben verbessert.

Das erfindungsgemässe Druckerzeugungsteil 32 umfasst einen Speicher bzw. Behälter 20 für den z.B. als Granulat einfüllbaren Schmelzkleber. Mittels einer Heizung 33 wird der Behälter 20 auf eine gewünschte Temperatur gebracht und damit der Schmelzkleber 5 verflüssigt.

Mittels einer Heizung 33, welche eines oder mehrere Heizelemente umfasst, kann auch eine ganze Baugruppe, der Schmelzkleber 5 im Behälter 20 und die Luft in der Baugruppe auf eine gewünschte Temperatur gebracht werden. Zumindest im unteren Teil des Behälters 20, wo die Leitungen zum Weiterleiten des Schmelzklebers 5 münden, wird dieser durch die Heizung 33 verflüssigt, so dass er in fluider Form zur Verwendung bereitsteht.

Zwei über einen Motor 34 und eine Welle 35 mittels Exzenter 36,36' angetriebene Kolben 37,37' bewegen sich zyklisch in je einem Zylinder 38,38'. Beide Zylinder 38,38' münden in je eine Düsenleitung 39,39', welche sich in der kegelstumpfförmigen Düse 8 vereinigen und in einer gemeinsamen Öffnung 4 an der abgeflachten Oberfläche des Kegelstumpfes 9 münden.

Diese kegelstumpfförmige Düse 8 bildet das Appliziermittel 3 der erfindungsgemässen Vorrichtung 1.

Wenn nun der erste Kolben 37 vom Exzenter 36 zurückgezogen wird, wird fluides Verbindungsmaterial 5 (Schmelzkleber) durch eine Behälterleitung 40 in den ersten Zylinder 38 gesogen. Dabei gibt ein sich öffnendes, erstes Rückschlagventil 41 den Weg zum Zylinder 38 frei. Ein zweites und drittes Rückschlagventil 42,43 sind, insbesondere zum Verhindern des Einströmens von Luft in den Zylinder 38, durch die entstehende Saugwirkung und durch ihre interne Federspannung geschlossen. Beim Erreichen des hinteren Umkehrpunktes des ersten Kolbens 37 schliesst sich das erste Rückschlagventil 41 unter seiner internen Federspannung. Anschliessend wird der Kolben 37 vom Exzenter 36 vorgeschoben, wodurch der Druck im ersten Zylinder 38 - gegen den einstellbaren Federdruck des zweiten Rückschlagventils 42 - erhöht wird. Falls der am zweiten Rückschlagventil 42 vorgewählte Zylinderdruck übertroffen wird, öffnet sich dieses Ventil 42 und entlässt so lange Schmelzkleber in die Überdruckleitung 44 und zurück in den Behälter 20, wie der Zylinderdruck zu hoch ist. Es resultiert somit ein vorwählbarer, im Wesentlichen gleichbleibender Druck, der genügend hoch ist, das dritte Rückschlagventil 43 zu öffnen und die Düse 8 über die Düsenleitung 39 mit flüssigem Schmelzkleber zu beliefern. Beim Erreichen des vorderen Umkehrpunktes des Kolbens 37 schliessen sich alle eventuell noch offenen Rückschlagventile (z.B. 43), worauf der nächste Zyklus beginnt.

Wenn der erste Kolben 37 an seinem hinteren Umkehrpunkt ankommt, erreicht der zweite Kolben 37' gerade seinen vorderen Umkehrpunkt. Wenn nun der zweite Kolben 37' vom Exzenter 36' zurückgezogen wird, wird Luft (Hilfsfluid 12) durch eine Luftansaugleitung 45 in den zweiten Zylinder 38' gesogen. Dabei gibt ein sich öffnendes, viertes Rückschlagventil 46 den Weg zum Zylinder 38' frei. Ein fünftes und sechstes Rückschlagventil 47,48 sind durch die entstehende Saugwirkung und durch ihre interne Federspannung geschlossen. Beim Erreichen des hinteren Umkehrpunktes des zweiten Kolbens 37' schliesst sich das vierte Rückschlagventil 46 unter seiner internen Federspannung. Anschliessend wird der Kolben 37' vom Exzenter 36' vorgeschoben, wodurch der Druck im zweiten Zylinder 38' - gegen den einstellbaren Federdruck des fünften Rückschlagventils 47 - erhöht wird. Falls der am fünften Rückschlagventil 47 vorgewählte Zylinderdruck übertroffen wird, öffnet sich dieses Ventil 47 und entlässt so lange Luft in die Überdruckleitung 44' und die Umgebung, wie der Zylinderdruck zu hoch ist. Es resultiert somit ein vorwählbarer, im Wesentlichen gleichbleibender Druck, der genügend hoch ist, das sechste Rückschlagventil 48 zu öffnen und die Düse 8 über die Düsenleitung 39' mit dem Hilfsfluid 12 zu beliefern. Beim Erreichen des vorderen Umkehrpunktes des Kolbens 37' schliessen sich alle eventuell noch offenen Rückschlagventile (z.B. 48), worauf der nächste Zyklus beginnt.

Zum Ausführen des beschriebenen Durchdringungs-Punkt-Verfahrens werden durch dieses abwechselnde Ausstossen von Schmelzkleber und Luft aus der Düse 8 definierte Portionen des Verbindungsmaterial 5 produziert, welche in die Textilien 2,2' eingespritzt werden können.

Wird abwechselnd Schmelzkleber und Luft ausgestossen, währenddem der Stoffschieber 24' die zu verbindenden Textilien 2,2' gerade transportiert, so ergeben sich bei diesem Verfahren Klebepunkte (vgl. Fig. 7A,7B, oben). Wird jedoch immer zwischen den Schritten des Stoffschieber 24' abwechselnd Schmelzkleber und Luft ausgestossen, so ergeben sich beim Durchdringungs-Punkt-Verfahren Kleberinge (vgl. Fig. 7C,7E). Dies, weil die Düse zur Zeit des Ausblasens von Luft als Hilfsfluid 12 immer noch über dem Schmelzkleberpunkt 26 steht und dessen Zentrum ausbläst, so dass ein Teil der Verbindungsmaterial-Portionen aus der Textilverbindung entfernt werden. Wie gezeigt kann - je nach dem gewählten Verhältnis von Schritttakt des Stoffschiebers 24' und Zyklus des Druckerzeugungsteils 32 - mit der gleichen Baugruppe eine Verbindung von Textilien 2,2' mittels Klebepunkten oder Kleberingen hergestellt werden.

Abweichend von der bisherigen Beschreibung des erfindungsgemässen Druckerzeugungsteils 32 kann die gezeigte Baugruppe auch zur Erzeugung eines kontinuierlichen Ausstossens von Verbindungsmaterial 5 bzw. Schmelzkleber verwendet werden, wenn die Ansaugleitung 45 und die Überdruckleitung 44' ebenfalls in den Behälter 20 geleitet werden. Falls eine noch gleichmässigere Lieferung der Düsen 8, 13 mit Schmelzkleber gewünscht wird, können auch drei oder mehr entsprechende und miteinander gekoppelte Zylinder vorgesehen werden. So kann, zum Ausführen des beschriebenen Durchdringungs-Strang-Verfahrens, durch dieses kontinuierliche Ausstossen von Schmelzkleber aus der Düse 8, Verbindungsmaterial 5 produziert und in die Textilien 2,2' eingespritzt werden.

Ebenfalls abweichend von der bisherigen Beschreibung des erfindungsgemässen Druckerzeugungsteils 32 kann eine andere, alternative Baugruppe zur Erzeugung eines höheren Druckes im Verbindungsmaterial 5 dienen. Bei jener Baugruppe handelt es sich z.B. um einen Extruder, der eine von einem Motor getriebene Förderschnecke und einen Düsenfuss für das Durchdringungs-Verfahren umfasst (nicht gezeigt). Bevorzugt ist ein Extruder mit einem aufgesetzten Behälter und einer integrierten Heizung, so dass - wie bei der Baugruppe von Fig. 12 - Verbindungsmaterial in Form von Granulat, Pulver oder auch als "Monofil" eingefüllt und verflüssigt werden kann. Ein Solenoid-Ventil gibt auch hier einem flüssigen Schmelzkleber den Weg zur Düse frei. Vorzugsweise koaxial mit dem Extruder ist eine Druckluftkammer angeordnet, welche gemeinsam mit dem Extruder aufheizbar und ebenfalls mit einem Solenoid-Ventil ausgerüstet ist. Die Düsenleitungen des Extruders und der Druckluftkammer vereinigen sich (ähnlich wie in Fig. 12) im Bereich des Düsenfusses und münden gemeinsam in einer Öffnung 4 an der Oberfläche des Düsenfusses bzw. Appliziermittels 3. Die Verwendung dieser alternativen Baugruppe zur Herstellung von Verbindungen wie sie oben beschrieben und in Fig. 7A,7B bzw. in Fig. 7C,7E dargestellt sind, erfolgt sinngemäss.

Das zu verwendende, fluide Verbindungsmaterial 5 kann als Flüssigkeit, als Flüssigkeits-Gas-Gemisch (wie z.B. als Schaum, Spray etc.) oder als Gas vorliegen. Falls das Verbindungsmaterial 5 in Schaumform eingebracht wird, entstehen dadurch elastischere Verbindungen zwischen den Textilien 2,2'. Die Kontaktstellen der beschlagenen Fibrillen verkleben miteinander. Mit Schaum geklebte, textile Flächengebilde (Gewebe, Gewirke, Fliese) bleiben in der Verbindungsregion elastischer als bei vollständiger Füllung mit einem flüssigen Verbindungsmaterial. Die so erhaltenen Verbindungen erreichen jedoch nicht dieselbe Belastbarkeit.

Als Hilfsfluid 12 eignen sich insbesondere Luft, chemisch inerte Gase (z.B. N₂), chemisch reaktive Gase, Flüssigkeits-Gas-Gemische oder auch Flüssigkeiten.
Vorteile der erfindungsgemässen Vorrichtung bzw. des erfindungsgemässen Verfahrens umfassen:
- Grundsätzlich wird auf das Verwenden von den die Textilien durchdringenden Nadeln verzichtet. Dies ermöglicht eine wesentlich schonendere Verbindung dieser Textilien miteinander: Nähgutschäden durch z.B. beim Transport zu stark gepresstes Nähgut oder gar durch beschädigte Nadelspitzen können nicht entstehen.
- Eine Wellenbildung in den Textilien, wie sie im Stand der Näh-Technik als "Nahtkräuseln" bekannt ist, kann vermieden werden:
   "Transportkräuseln" tritt auf, wenn beim Stofftransport die obere und untere Nähgutlage gegeneinander verschoben werden: Die untere Lage wird z.B. durch den Stoffschieber weiter geschoben, während die obere Lage vom Stoffdrücker (Nähfuss) zurückgehalten wird. Dies kann nicht auftreten, weil die erfindungsgemässe Vorrichtung 1 Rollen 30 und ein Transportband 24'' umfasst (vgl. Fig. 10), welche beide zu verbindenden Textilien 2,2' gleichmässig transportieren.
   "Verdrängungskräuseln" entsteht beim Einstich von Nadel und Faden in das Nähgut, weil dadurch Kett- und Schussfäden verdrängt werden. Dies kann nicht auftreten, weil das erfindungsgemässe Verfahren auf die Verwendung von Nadel und Faden verzichtet.
   "Spannungskräuseln" kann durch eine zu hohe Fadenspannung beim Nähen sowie ein ungünstiges Dehnungsverhalten der Nähzwirne verursacht werden. Dies kann nicht auftreten, weil die erfindungsgemässe Vorrichtung 1 Rollen 30 und ein Transportband 24'' umfasst (vgl. Fig. 10), welche beide zu verbindenden Textilien 2,2' gleichmässig transportieren. Dies kann nicht auftreten, weil das erfindungsgemässe Verfahren konsequent auf die Verwendung von Faden verzichtet.
- Ein gezielter Mehrtransport (Mehrweite der unteren oder oberen Stofflage) kann dank unabhängig voneinander ansteuerbarer Transportmittel 24 erzielt werden (vgl. Fig. 10).
- Die Vorrichtung kann in bestehende Nähmaschinen integriert werden, so dass deren Hilfsmittel, wie z.B. der Transportmechanismus (z.B. Stoffschieber), der Stoffdrücker (Nähfuss) und praktisch alle bekannten Nähgutführungen übernommen bzw. adaptiert werden können.
- Dank der erfindungsgemässen Verbindung wird auch bei grosser Zugbelastung derselben eine Bildung von Gewebeschäden (z.B. "Laufmaschen") verhindert, auch wenn bei solchen Verbindungen technischer Gewebe auf eine Überlappung der zu verbindenden Textilienabschnitte 6,6' ... verzichtet werden muss.

## Patentansprüche

1. Vorrichtung (1) zum Verbinden von Textilien (2,2') mit einem Appliziermittel (3), welches zumindest eine Öffnung (4) umfasst, über die ein fluides Verbindungsmaterial (5) zumindest teilweise zwischen zwei oder mehrere, zumindest teilweise aufeinandergelegte und im Wesentlichen flächige Textilienabschnitte (6,6',6''...) bringbar ist, wobei das Appliziermittel (3) zum Heranführen dieser Öffnung (4) in die Nähe einer Oberfläche der Textilien (2,2'), jedoch nicht zum Durchstossen dieser Textilien ausgebildet ist,
**dadurch gekennzeichnet, dass**
- die Vorrichtung (1) ein Druckerzeugungsteil (32) zur Erhöhung des Druckes des fluiden Verbindungsmaterials beim Ausstossen aus der zumindest einen Öffnung umfasst, mit dessen Hilfe das Verbindungsmaterial (5) in Textilien (2,2') hinein und durch diese hindurch pressbar ist und
- das Appliziermittel (3) bzw. die Öffnung (4) auf die Aussenseite von solchen Textilienabschnitten (6,6',6''...) bringbar ausgebildet ist.

2. Vorrichtung nach Anspruch 1, **dadurch gekennzeichnet, dass** das Druckerzeugungsteil (32) zum Erzeugen eines Druckes in einem Hilfsfluid (12) ausgebildet ist.

3. Vorrichtung nach Anspruch 1 oder 2, **dadurch gekennzeichnet, dass** sie Vorbereitungsmittel (22) zum Vorbereiten, insbesondere zum Vorwärmen, von Textilienabschnitten (6,6',6''...) umfasst.

4. Vorrichtung nach einem der vorstehenden Ansprüche, **dadurch gekennzeichnet, dass** sie Verfestigungsmittel (17) zum Verfestigen, insbesondere zum Abkühlen, des eingebrachten Verbindungsmaterials (5) umfasst.

5. Vorrichtung nach einem der vorstehenden Ansprüche, welche eine Arbeitsfläche (23) zum Auflegen von zu verbindenden Textilienabschnitten (6,6',6''...) umfasst, **dadurch gekennzeichnet, dass** sie ein Transportmittel (24) - zum Transportieren der Textilien gegenüber der Arbeitsfläche (23) und/oder dem Appliziermittel (3) - umfasst.

6. Vorrichtung nach Anspruch 5, **dadurch gekennzeichnet, dass** das Appliziermittel (3) gegenüber der Arbeitsfläche (23) und/oder dem Transportmittel (24) beweglich ausgebildet ist.

7. Verfahren zum Verbinden von Textilien (2,2') mit einer Vorrichtung (1), welche ein Appliziermittel (3) mit zumindest einer Öffnung (4) umfasst, bei dem ein fluides Verbindungsmaterial (5) zumindest teilweise zwischen zwei oder mehrere, zumindest teilweise aufeinandergelegte und im Wesentlichen flächige Textilienabschnitte (6,6'6,6''...) gebracht wird, wobei das Appliziermittel (3) mit dieser Öffnung (4) in die Nähe einer Oberfläche der Textilien (2,2') herangeführt wird, ohne diese Textilien zu durchstossen,
**dadurch gekennzeichnet, dass**
- mit einem Druckerzeugungsteil (32) zur Erhöhung des Druckes des fluiden Verbindungsmaterials beim Ausstossen aus der zumindest einen Öffnung das Verbindungsmaterial (5) in Textilien (2,2') hinein und durch diese hindurch gepresst wird und
- das Appliziermittel (3) bzw. die Öffnung (4) auf die Aussenseite von solchen Textilienabschnitten gebracht wird.

8. Verfahren nach Anspruch 7, **gekennzeichnet durch** die folgenden Arbeitsschritte:
• Bereitlegen von Textilmaterialien (2,2') zwischen einem mit einem Appliziermittel (3) ausgerüsteten Nähfuss (25) und einem als Stoffschieber (24') ausgebildeten Transportmittel (24);
• Einspritzen bzw. Durchspritzen einer ersten dosierten Menge (26) von Verbindungsmaterial (5) in bzw. **durch** das Textilmaterial (2,2');
• Ausführen eines Hubes mit dem Stoffschieber (24') und Positionieren des ersten eingespritzten Verbindungsmaterial-Punktes (26) an dem Verfestigungsmittel (17);
• Verfestigen des ersten eingespritzten Verbindungsmaterial-Punktes (26) und Einspritzen einer zweiten dosierten Menge (26) von Verbindungsmaterial (5) in das Textilmaterial (2,2').

9. Verfahren nach Anspruch 7, **gekennzeichnet durch** die folgenden Arbeitsschritte:
• Bereitlegen von Textilmaterialien (2,2') zwischen einem mit einem Verfestigungsmittel (17) ausgerüsteten Gleitblock (28) und einem mit einem Verfestigungsmittel (17) ausgerüsteten und bandförmigen Transportmittel (24'');
• Einspritzen bzw. Durchspritzen von Verbindungsmaterial (5) in das Textilmaterial (2) sowie Transportieren der Textilmaterialien (2,2') und Verfestigen des entstehenden Verbindungsmaterial-Bandes (26') in kontinuierlicher Weise.

10. Verfahren nach Anspruch 9, **dadurch gekennzeichnet, dass** der Gleitblock (28) mit dem Appliziermittel (3) - zum Erzeugen einer von einer Geraden abweichenden Verbindung - gegenüber dem Transportmittel (24) bewegt wird.

11. Verfahren nach einem der Ansprüche 7 bis 10, **dadurch gekennzeichnet, dass** - abwechselnd mit dem Einbringen des Verbindungsmaterials (5) - ein Hilfsfluid (12) durch die gleiche Öffnung (4) wie das Verbindungsmaterial (5) gepresst wird, so dass Portionen (26) des Verbindungsmaterials eingebracht werden.

12. Verfahren nach Anspruch 11, **dadurch gekennzeichnet, dass** mit dem Hilfsfluid (12) zumindest ein Teil der Verbindungsmaterial-Portionen (26) aus der Textilverbindung entfernt werden.

## Revendications

1. Dispositif (1) pour raccorder des textiles (2, 2') à l'aide d'un moyen d'application (3), lequel contient au moins une ouverture (4), à travers laquelle un matériau de raccordement (5) fluide est déposé au moins partiellement entre deux ou plusieurs sections de textile (6, 6', 6''...) au moins partiellement superposées les unes aux autres et essentiellement plates, dans lequel le moyen d'application (3) comportant cette ouverture (4) est conçu pour s'approcher d'une surface supérieure du textile (2, 2'), néanmoins sans transpercer ce textile,
**caractérisé en ce que**
- le dispositif (1) contient une partie de génération de pression (32) pour augmenter la pression du matériau de raccordement fluide lors de l'éjection de ce dernier d'au moins une ouverture, à l'aide de laquelle le matériau de raccordement (5) peut être pressé dans les textiles (2, 2') et à travers ces derniers et
- le moyen d'application (3), respectivement l'ouverture (4), est conçu de manière à pouvoir être approché du coté externe de telles sections de textiles (6, 6', 6''...).

2. Dispositif selon la revendication 1, **caractérisé en ce que** la partie de génération de pression (32) est conçue de manière à générer une pression dans un fluide auxiliaire (12).

3. Dispositif selon la revendication 1 ou 2, **caractérisé en ce qu'**il contient un moyen de préparation (22) pour préparer, notamment préchauffer, des sections de textiles (6, 6', 6''...).

4. Dispositif selon une quelconque des revendications précédentes, **caractérisé en ce qu'**il contient un moyen de consolidation (17) pour consolider, notamment pour refroidir, le matériau de raccordement (5) qui est déposé.

5. Dispositif selon une des revendications précédentes, lequel contient une surface de travail (23) pour étendre les sections de textiles (6, 6', 6''...) qui doivent être raccordées, **caractérisé en ce qu'**il contient un moyen de transport (24) pour transporter les textiles relativement à la surface de travail (23) et/ou au moyen d'application (3).

6. Dispositif selon la revendication 5, **caractérisé en ce que** le moyen d'application (3) est conçu d'être mouvant relativement à la surface de travail (23) et/ou au moyen de transport (24).

7. Procédé pour raccorder des textiles (2, 2') au moyen d'un dispositif (1), lequel contient un moyen d'application (3) présentant au moins une ouverture (4), à travers laquelle un matériau de raccordement (5) fluide est déposé au moins partiellement entre deux ou plusieurs sections de textiles (6, 6'6, 6''...) au moins partiellement superposées les unes aux autres et essentiellement plates, dans lequel le moyen d'application (3) présentant cette ouverture (4) est approché d'une surface supérieure des textiles (2, 2'), sans néanmoins transpercer ces textiles,
**caractérisé en ce que**
- Une partie de génération de pression (32) pour augmenter la pression du matériau de raccordement fluide lors de l'éjection de ce dernier d'au moins une ouverture presse le matériau de raccordement (5) dans les textiles (2, 2') et à travers ces derniers et
- Le moyen d'application (3), respectivement l'ouverture (4), est approché du côté externe de telles sections de textiles.

8. Procédé selon la revendication 7, **caractérisé par** les étapes de traitement suivantes :
- Etalement du matériau textile (2, 2') entre un pied-de-biche (25) équipé d'un moyen d'application (3) et un moyen de transport (24) réalisé sous la forme d'un dérouleur de tissu (24') ;
- Injection d'une première quantité (26) dosée de matériau de raccordement (5) dans, respectivement à travers, le matériau textile (2, 2') ;
- Déclenchement du déroulement du dérouleur de tissu (24') et positionnement du premier point d'injection (26) de matériau de raccordement sur le moyen de consolidation (17) ;
- Consolidation du premier point d'injection (26) de matériau de raccordement et injection d'une deuxième quantité (26) dosée de matériau de raccordement (5) dans le matériau textile (2, 2').

9. Procédé selon la revendication 7, **caractérisé par** les étapes de traitement suivantes :
- Etalement du matériau textile (2, 2') entre un bloc coulissant (28) équipé d'un moyen de consolidation (17) et un moyen de transport (24'') en forme de bande et équipé d'un moyen de consolidation (17) ;
- Injection d'un matériau de raccordement (5) dans, respectivement à travers, le matériau textile (2) ainsi que transport du matériau textile (2, 2') et consolidation continuelle de la bande de matériau de raccordement (26') qui en résulte.

10. Procédé selon la revendication 9, **caractérisé en ce que** le bloc coulissant (28) comportant le moyen d'application (3) est déplacé relativement au moyen de transport (24) afin de produire un raccordement qui dévie d'une ligne droite.

11. Procédé selon une des revendications 7 à 10, **caractérisé en ce que**, en alternance avec le dépôt du matériau de raccordement (5), un fluide auxiliaire (12) est déposé à travers la même ouverture (4) par laquelle le matériau de raccordement (5) est pressé, de telle sorte que des portions (26) du matériau de raccordement soient déposées.

12. Procédé selon la revendication 11, **caractérisé en ce qu'**au moins une partie des portions de matériau de raccordement (26) est éloignée du raccordement textile au moyen du fluide auxiliaire (12).

## Claims

1. Device (1) for connecting textiles (2, 2') with an application means (3) having at least one opening (4), with which a fluid connecting material (5) can be brought at least partially between two or more, at least partially stacked, and essentially flat textile sections (6, 6', 6'', ...), wherein the application means (3) is designed to bring this opening (4) close to a surface of the textiles (2, 2'), but not to punch through these textiles,
**characterized in that**
- the device (1) comprises a pressure-generating part (32) for increasing the pressure of the fluid connecting material during ejection from the at least one opening, with which the connecting material (5) can be pressed into and through textiles (2, 2'), and
- the application means (3) or the opening (4) is designed so that it can be slipped onto the outside of such textile sections (6, 6', 6'', ...).

2. Device according to claim 1, **characterized in that** a pressure-generating part (32) is designed for generating a pressure in an auxiliary fluid (12).

3. Device according to claim 1 or 2, **characterized in that** it comprises preparation means (22) for preparing, in particular preheating, textile sections (6, 6', 6'', ...).

4. Device according to one of the preceding claims, **characterized in that** it has hardening means (17) for hardening, in particular for cooling, the introduced connecting material (5).

5. Device according to one of the preceding claims, comprising a working surface (23) upon which to place textile sections (6, 6', 6'', ...) to be connected, **characterized in that** it comprises a transport means (24) for transporting he textiles relative to the working surface (23) and/or the application means (3).

6. Device according to claim 5, **characterized in that** the application means (3) is designed so that it can move relative to the working surface (23) and/or transport means (24).

7. Method for connecting textiles (2, 2') with a device (1) that comprises an application means (3) having at least one opening (4), in which a fluid connecting material (5) can be brought at least partially between two or more, at least partially stacked, and essentially flat textile sections (6, 6' , 6'', ...), wherein the application means (3) brings this opening (4) close to a surface of the textiles (2, 2') without punching through these textiles,
**characterized in that**
- a pressure-generating part (32) for increasing the pressure of the fluid connecting material during ejection from the at least one opening presses the connecting material (5) into and through textiles (2, 2'), and
- the application means (3) or the opening (4) is slipped onto the outside of such textile sections (6, 6', 6'', ...) .

8. Method according to claim 7, **characterized by** the following steps:
- Placing textile materials (2, 2') between a sewing foot (25) equipped with an application means (3) and a transport means (24) designed as a feeder (24');
- Spraying a first metered quantity (26) of connecting material (5) into or through the textile material (2, 2');
- Lifting with the feeder (24') and positioning the first sprayed connecting material point (26) on the hardening means (17);
- Hardening the first sprayed connecting material point (26) and spraying a second metered quantity (26) of connecting material (5) into the textile material (2, 2').

9. Method according to claim 7, **characterized by** the following steps:
- Placing textile materials (2, 2') between a sliding block (28) equipped with a hardening agent (17) and a belt-like transport means (24'') equipped with a hardening means (17);
- Spraying connecting material (5) into or through the textile material (2), and transporting the textile materials (2, 2') and continuously hardening the resultant connecting material belt (26').

10. Method according to claim 9, **characterized in that** the sliding block (28) is moved with the application means (3) relative to the transport means (24) to generate a connection deviating from a straight line.

11. Method according to one of claims 7 to 10, **characterized in that** the process of incorporating the connecting material (5) is alternated with pressing an auxiliary fluid (12) through the same opening (4) as the connecting material (5), so that portions (26) of the connecting material are introduced.

12. Method according to claim 11, **characterized in that** at least some of the connecting material portions (26) are removed from the textile connection with the auxiliary fluid (12).
